# EUROPEAN PATENT APPLICATION

(11) **EP 1 255 187 A2**
(43) Date of publication of application: **06.11.2002**
(21) Application number: 02009945.3
(22) Date of filing: 03.05.2002
(51) Int. Cl.: G06F 3/033

(54) **Adapting data in a communication system**

(30) Priority: 04.05.2001 GB 0110993
(71) Applicant: MOTOROLA, INC., Schaumburg, IL 60196 (US)
(72) Inventor: Baker, Paul Dominic, Fair Oak, Hampshire, SO50 7NG (GB); Jervis, Clive Andrew, Southampton, Hampshire, S040 4XD (GB)
(74) Representative: Treleven, Colin

(57) **Abstract**

A communication system (1) comprises a user terminal (4), a data providing means (2), and a means for adapting data to the handedness (i.e. whether left-handed or right-handed) of a user. In one embodiment, the user terminal (4) negotiates with the data providing means (2). In another embodiment, a handedness proxy server (14) negotiates with the data providing means (2). In another embodiment, a handedness proxy server (14) receives the data and adapts it to the handedness of the user prior to transmitting it to the user terminal (4). In another embodiment, a handedness proxy server (14) intercepts and adapts a request from the user terminal (4) prior to forwarding the request to the data providing means (2). The data can be adapted by altering the layout of displayed data or changing the assignment of keys for applications.

## Description

### Field of the Invention

This invention relates to communication systems comprising user terminals.

### Background of the Invention

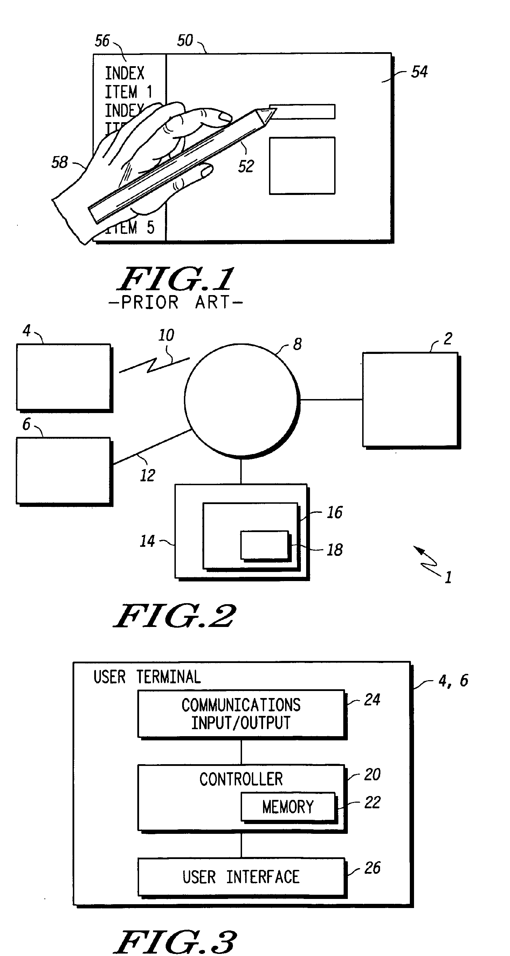

Many user terminals (also known as subscriber units, user stations, communication devices etc.), including particularly devices such as personal data assistants (also known as personal organisers) and mobile telephones incorporate user interfaces that support applications such as pen-based applications or touch screen applications. These are often set up for right-handed users, and are cumbersome for left-handed people to use. For example, web-browsers will present index menus contained within web pages on the left-hand side of the display, as shown in FIG. 1. Note that this is the default provided by many web page development packages. This means that left-handed people cannot see the menus when filling out forms etc. This problem will become much more apparent when Wireless Application Protocol (WAP) services become available, especially that of WAP Telephony Applications (WTA) facilitating the design of network specific call control user-interfaces. Alternatively, designs may need to be compromised, reducing the effectiveness for right-handed people, in order to allow acceptable use by left-handed users.

The document Beverly L.Harrison, Kenneth P. Fishkin, Anuj Gujar, Carlos Mochon, Roy Want, "Squeeze Me, Hold Me, Tilt Me! An Exploration of Manipulative User Interfaces", CHI 98, Human Factors in Computing Systems presents a method of automatically detecting the handedness of personal data assistants. This does not however relate to communication aspects of such devices nor to communication systems.

Furthermore, HTML/XML to WML proxy servers are a known concept. Theses servers convert WWW pages written using either HTML or XML into the WAP Mark-up Language WML. These servers know nothing of handedness.

Thus there exists a need in the field of communication systems and devices to alleviate the disadvantages introduced by the different possible handedness (i.e. whether right-handed or left-handed) of a user of a user terminal.

Published UK patent application GB-A-2320783 shows a handheld device wherein the orientation of the display is automatically reconfigured within the device to suit left- or right-handed users.

Published US patent application US-A-5402152 shows a method for repositioning scroll bars on a display according to the handedness of the user.

### Summary of Invention

The present invention provides means for adapting data for a user terminal to the handedness of a user of the user terminal.

In a first aspect, the present invention provides a communication system, as claimed in claim 1.

In a second aspect, the present invention provides a method of operating a communication system, as claimed in claim 14.

Further aspects are as claimed in the dependent claims.

Aspects of the present invention provide, or allow for the provision of, any one or any combination of the following:
(i) The uploading of 'handedness' preferences to a server;
(ii) The registration of 'handedness' with a server;
(iii) The detection together with registration of 'handedness' with a server;
(iv) A proxy server that deals specifically with 'handedness' according to users' preferences;
(v) A proxy server that deals with the automatic translation of web pages according to 'handedness';
(vi) Negotiation of 'handedness' by server on behalf of the user for application downloads;
(vii) The communication of 'handedness' during transaction requests; and
(viii) The automatic configuration of user interfaces (e.g. key assignments) depending on user preferences and application.

### Brief Description of the Drawings

Embodiments of the present invention will now be described, by way of example only, with reference to the accompanying drawings, in which:
FIG. 1 shows data displayed in a prior art manner on a display of a user terminal;
FIG. 2 is a schematic illustration of a communication system;
FIG. 3 is a block diagram illustrating certain functional modules of user terminals of the communication system of FIG. 1;
FIG. 4 is a flow chart of process steps of an embodiment of the invention; and
FIG. 5 shows data adapted under an embodiment of this invention and displayed on a display of a user terminal.

### Description of Preferred Embodiments

### Embodiment 1

FIG. 2 is a schematic illustration of a communication system 1 according to the first embodiment.

The communication system 1 comprises an information providing means 2, which in this embodiment is a web server 2, a handedness proxy server 14, a wireless user terminal 4 and a wireline user terminal 6. The system contains many other user terminals, but for clarity these are not shown.

The handedness proxy server 14 comprises, inter alia, a controller 16 which itself includes a memory 18.

The controller 16 controls the overall operation of the handedness proxy server 14, including operation of parts not required to be described for the purpose of understanding this embodiment, in a conventional manner. In addition, in this embodiment the controller 16 controls implementation of the contribution played by the handedness proxy server 14 with respect to adaptation of data to the handedness (i.e. whether left-handed or right handed) of the users of the user terminals 4, 6, which adaptation will be described in more detail below.

In this embodiment the controller 16 is a central processing unit (CPU), i.e. a processor configured with program instructions and/or data for such implementation. The program instructions and/or data are held in the memory 18 in a storage medium such as a PROM forming part of the memory 18. In other embodiments, the program instructions and/or data may be stored in other types of storage medium, such as floppy or hard disk. Furthermore, in other embodiments, the controller 16 may instead be formed of hardware, firmware, other software or any combination of these.

In this embodiment the wireless terminal 4 is a mobile telephone able to access the Internet using the WAP protocol, and the wireline terminal 6 is a personal organiser with a web browser function. In other embodiments however the user terminals may be any appropriate user terminals benefiting from the present invention.

The above described items are coupled via a network 8, which in this embodiment is the Internet. Wireless terminal 4 and wireline terminal 12 are coupled to an Internet service provider server (which forms part of the Internet as represented in FIG. 2, and is therefore not shown separately) by a radio link 10 and a landline telephone link 12 respectively.

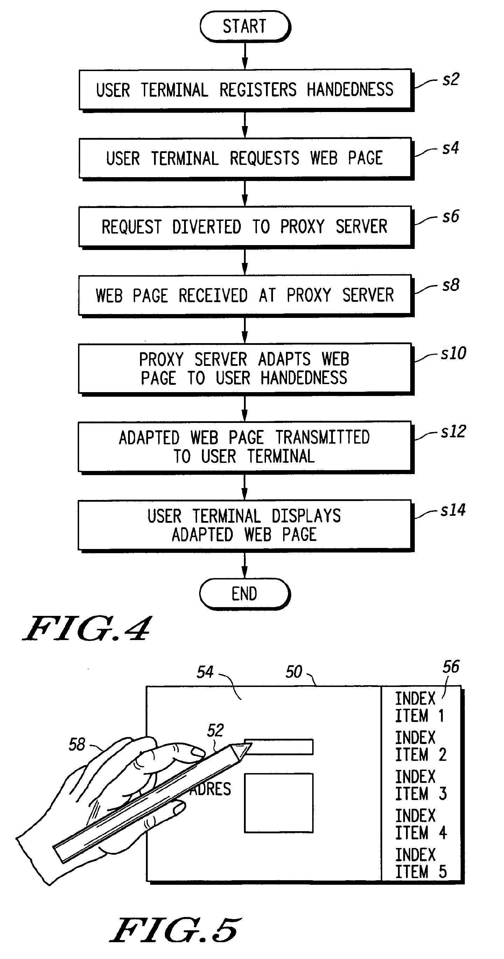

FIG. 3 shows a block diagram illustrating certain functional modules of the user terminals 4,6 which are useful for understanding this embodiment.

Each of the user terminals 4, 6 comprises a communication input/output module 24, which in conventional manner receives and processes data (e.g. speech, control signals, web pages etc.) transmitted to the user terminal from the network 8 and similarly processes and transmits data (e.g. speech, control signals, web browsing requests etc.) to the network 8. In the case of wireless terminal 4 the communication input/output module 24 is of a conventional form employed in mobile telephones for communicating over radio link 10 with a base station of a cellular communication network and thence on to the above mentioned Internet service provider server via conventional network switching arrangements. In the case of wireline terminal 6 the communication input/output module 24 is of a conventional form for connection over telephone link 12 forming part of a public switched telephone network (PSTN) to the Internet service provider server.

Each of the user terminals 4, 6 further comprises a user interface 26, which enables a user of the user terminal to glean information provided by data received at the terminal or generated by the terminal, and to input information and instructions to the user terminal for transmission to the network or for operation of the terminal. In this embodiment, the user interfaces include a display, a keyboard, and a conventional pen-based interface in which a pen-type pointer provides input to the user terminal when touched against relevant parts of the display, in conjunction with prompt items displayed at that time on the display.

Each of the user terminals further comprises a controller 20, which contains a memory 22. The controller 20 is coupled to the communication input/output module 24 and the user interface 26. The controller 20 controls the overall operation of the user terminal, including operation of parts not required to be described for the purpose of understanding this embodiment (such as microphone, loudspeaker, control protocol processing etc. in the case of the wireless user terminal 4), in conventional manner. In addition, in this embodiment the controller 20 controls implementation of a web browser function, and controls implementation of the contribution played by the user terminal with respect to adaptation of data to the handedness (i.e. whether left-handed or right handed) of the users of the user terminal 4, 6, which adaptation will be described in more detail below.

In this embodiment the controller 20 is a central processing unit (CPU), i.e. a processor configured with program instructions and/or data for such implementation. The program instructions and/or data are held in the memory 22 in a storage medium such as a PROM forming part of the memory 22. In other embodiments, the program instructions and/or data may be stored in other types of storage medium, such as floppy or hard disk, or in a smart card or similar module, e.g. in the case of mobile telephones, in a subscriber identification module (SIM).

Furthermore, in other embodiments, the controller 20 may instead be formed of hardware, firmware, other software or any combination of these.

The process steps carried out under this embodiment are shown in the flow chart of FIG. 4. At step s2 the users of the respective user terminals 4, 6 are registered with the handedness proxy server 14 either via:
(i) Direct user action in which the user enters his/her handedness into the user terminal via user interface 26, which information is then uploaded to the handedness proxy server 14. In addition, preferences related thereto may be entered and uploaded, such as which types of data the user wishes to have adapted to his handedness, or
(ii) The user terminal carries out automatic detection of a user's handedness, using the techniques described (in relation to a non-communication device) in Beverly L.Harrison, Kenneth P. Fishkin, Anuj Gujar, Carlos Mochon, Roy Want, "Squeeze Me, Hold Me, Tilt Me! An Exploration of Manipulative User Interfaces", CHI 98, Human Factors in Computing Systems, and uploads this to the handedness proxy server.

In this embodiment, the web browsing function of the user terminals 4, 6 is adapted so that when websites to be visited are specified i.e. requested by the user (at step s4), the Internet service provider server (not shown) diverts the website demand i.e. request, to the handedness proxy server. This is done in conventional fashion as per other divert modes used for other types of proxy servers. The handedness proxy server then forwards it to the website server 2.

In this embodiment the requested web page, constituting data to be transmitted to the user terminal, is returned from the website server 2 to the handedness proxy server 14 which thus receives it (at step s8).

In this embodiment, the user is entering selection of web pages, and then inputting data into forms on the web pages with a pen-based interface to the web browser application. The web page initially sent by the web server 2 to the handedness proxy server 14 is a WML index page (alternatively an XML or HTML index page) containing an index 56 in a left-hand positioned frame of the web page, the remainder of the page comprising a form 54 into which the user is to input information. This web page is shown in prior art FIG. 1 in the form it would be displayed on a display 50 of the user terminal 4, 6, were it not to be adapted according to this embodiment. In this embodiment the users of the user terminals 4, 6 are left-handed. Prior art FIG. 1 further shows the situation that would arise if the web page were forwarded to such a user terminal's without adaptation. Using the pen 52, the user's left hand 58 obscures the information in the left-hand positioned index 56.

However, in this embodiment the handedness proxy server 14 matches the received web page with the user's registered handedness (here, left-handed) or handedness-related preferences, and adapts the web page accordingly. The handedness proxy server employs algorithms containing rules for determining which parts of each web page to adapt, and in which manner to adapt such parts. The exact rules are selected by the skilled person as appropriate. One such (exemplary) rule specifies that any web page with a frame on the left-hand side, of width less than a third of the overall web page, shall be adapted by repositioning the frame on the right-hand side. This adaptation of the web page is carried out by the handedness proxy server (at step s10), and the adapted web page is transmitted to the user terminal 4, 6 (at step s12). The resulting layout of this web page as now received by the user terminal and displayed on display 50 is as shown in FIG. 5. It can be readily appreciated that the index 56 is now positioned on the right hand side, and thus is no longer obscured by the user's (left) hand 58.

In other words, and to summarize this embodiment, without the interception of a 'handedness' proxy server the user may see web pages that reflect a right-handed bias, as per FIG. 1. As can be seen, a left-handed user is entering information into the form. In doing so, the user is obscuring information on the index page. To avoid this problem, users can register with the handedness proxy server 14 stating that they would like to view web pages with a left-handed bias. This means that as the user requests the pages they are automatically adjusted to their preferences e.g. FIG. 5 shows an example of how the web screen illustrated is transformed.

More generally, the handedness proxy server intercepts requests and/or information sent or received by the user and performs any 'handedness' transforms that are appropriate.

### Embodiment 2

This embodiment is the same as the first embodiment, except after receiving the data request from the user terminal, the handedness proxy server forwards this request, plus details of the handedness and handedness-related preferences of the relevant user (thereby effectively adapting the original request to form a handedness adapted request), and the adaptation to the handedness is implemented by the data providing means 2, e.g. the web server, itself.

### Embodiment 3

This embodiment is the same as the above described embodiments, except that the system is arranged such that the user terminals 4, 6 directly request the data (e.g. web pages or other Internet accessed data) from the information providing means 2 (e.g. a web server), that is without the request being diverted through the handedness proxy server 14. In this case, the request is formed by the user terminal such that the information providing means 2, or some part of the network 8, diverts the requested data when sent from the information providing means 2, via the handedness proxy server 14, which adapts the data to the handedness of the relevant user, as described above, before forwarding it i.e. transmitting it to the user terminal.

In each of the above embodiments, the handedness proxy server is remote from the conventional Internet service provider server (not shown) employed by the users for Internet access. Alternatively, the handedness proxy server can be arranged to form part of the Internet service provider server.

### Embodiment 4

In this embodiment, parts and operations of the system are the same as described above for the first embodiment, except where otherwise mentioned below.

A user of the user terminal 4, 6, e.g. a personal data assistant, uses the user terminal 4, 6 to communicate with the information providing means 2, via the network 8 to request the download of a new application. The information providing means 8 is, in this example, a server supporting the negotiation of different context-aware applications. As part of the request for the application, the user terminal 4, 6 employs negotiation protocols supported by the information providing means 8 to specify the handedness preference for the application. Such negotiations can generally be supported by Internet protocols, and in this embodiment is supported by HTTP. In doing so, the user terminal 4, 6 effectively performs handedness negotiations directly with the information providing means 2. This negotiation may involve the user terminal 4, 6 in a simple one-drop request including its handedness preferences, or may involve an iterative, two-way communication process, depending on the protocol and other details.

In accordance with the negotiations, the information providing means 8 adapts the application to be downloaded to the user terminal 4, 6, i.e. the data to be transmitted to the user terminal 4, 6, according to the handedness of the user. In this embodiment the application is adapted such that any information displayed on the display 50 whilst the application is run by the user terminal 4, 6 will be adapted (by the program instructions of the application) for suitable display to a left-handed user, in a way corresponding to the way the display of individual web pages was adapted in the first embodiment (and of which one example was shown in FIG. 5). The application may be any type of downloadable application, e.g. a general computer program that is downloadable to the user terminal, a game, a specific terminal function, or web pages themselves.

### Embodiment 5

In the above described fourth embodiment, all the communication traffic required for the negotiation was carried across the respective initial communication link 10, 12 from the user terminal 4, 6 to the network 8. This can be inefficient, especially in the case of wireless user terminal 4, as the radio link 10 may be using up a particularly limited resource.

To alleviate this, the fifth embodiment employs the same negotiation process as the fourth embodiment, but the handedness proxy server 14 performs the negotiations on behalf of the user terminals 4, 6. This removes the need for:
(i) User involvement in handedness negotiations; and
(ii) Passing negotiation traffic across the wireless interface.

More generally, in this embodiment the handedness proxy server intercepts requests and/or information sent or received by the user and performs any handedness negotiations that are appropriate.

### Further Possibilities

The above embodiments have been described in relation to the adaptation of data to handedness comprising adaptation of the way the data is displayed. The adaptation can however comprise any useful form of adaptation to a user's handedness. For example, the data may consist of or include assignment of one or more features of the user terminal, such as one or more keys of the keyboard (e.g. in the case where a game application is downloaded, and respective keys are assigned for respective game actions such as "move left", "move right", "jump" and so on).

The above embodiments have been described in relation to data transmission via the Internet. It will however be appreciated that the present invention is applicable to any suitable communication system in which a user terminal receives data from a data providing means. For example the invention can be applied to information networks other than the Internet, e.g. intranets. Also, the network 8 can simply be a public telecommunication network, e.g. a PSTN with any other appropriate networks, or other networks such as cellular radio networks, coupled thereto. As such, the network 8 is to be considered in its most general form as any means for linking the user terminal with the data providing means, and where required, the handedness proxy server.

For example, user terminals may be terminals used by operators in a factory, the network may comprise an internal telephone switchboard and network arrangement, including fixed line or cordless telephones, or a local mobile radio system with radio handsets incorporating data displays, and the data providing means may be a computer at the factory used to inform factory workers of schedules and task instructions, or materials quantities, etc. etc.

Returning to the case where the network 8 comprises some form of public network, and the user terminal 4 is a mobile telephone, the cellular communication network serving the mobile telephone may be any suitable type, e.g. GSM (Global System for Mobile Communications), UMTS (Universal Mobile Telephone System) etc.

Generally, the inventive concepts contained herein are equally applicable to any suitable communication system. Whilst specific, and preferred, implementations of the present invention are described above, it is clear that variations and modifications of such inventive concepts could be readily applied by one skilled in the art.

## Claims

1. A communication system (1) comprising a user terminal (4), data providing means (2), and means for transmitting data from the data providing means (2) to the user terminal (4), **characterised by**:
means for adapting the data to the handedness of a user of the user terminal (4).

2. A communication system (1) according to claim 1, wherein the user terminal (4) comprises means for performing negotiation with the data providing means (2) such that the data providing means (2) adapts the data to the handedness of the user.

3. A communication system (1) according to claim 1, wherein a handedness proxy server (14) is arranged to receive a request for the data from the user terminal (4), adapt the request according to the handedness of the user, and forward the handedness adapted request to the data providing means (2).

4. A communication system (1) according to claim 1, wherein a handedness proxy server (14) is arranged to receive the data from the data providing means (2), adapt the data to the handedness of the user, and transmit the handedness adapted data to the user terminal (4).

5. A communication system (1) according to claim 1, wherein a handedness proxy server (14) comprises means for performing negotiation with the data providing means (2) such that the data providing means (2) adapts the data to the handedness of the user.

6. A communication system (1) according to any of claims 3 - 5, wherein the handedness proxy server (14) may be included with the data providing means (2).

7. A communication system (1) according to any preceding claim, wherein the data comprises any or all of:
(i) data to be displayed on a display (50) of the user terminal (4), and the adaptation of the data to the handedness of the user is such that the layout of the data when displayed is adapted to the handedness of the user, preferably by re-positioning a component (56) of a web page from the left-hand side of the web-page to the right-hand side of the web-page;
(ii) information to control terminal handedness characteristics, preferably the characteristics comprising key functions;
(iii) handedness-specific versions of software.

8. A communication system (1) according to any preceding claim, wherein the handedness of the user is specified by the user via a user interface (26) of the user terminal (4).

9. A communication system (1) according to any of claims 1 to 7, wherein the handedness of the user is detected by the user terminal (4).

10. A communication system (1) according to any of claims 3 to 9, wherein the handedness of the user is uploaded to the handedness proxy server on a per- request basis.

11. A communication system (1) according any of claims 3 to 9, wherein the handedness of the user is registered at the handedness proxy server (14).

12. A communication system (1) according to any preceding claim, wherein the user terminal (4) is either a personal digital assistant or telephone comprising wireless communication means.

13. A communication system (1) according to any preceding claim, wherein the user terminal (4) comprises a pen-based (52) user interface (26).

14. A method of communication comprising a user terminal (4), data providing means (2), and means for transmitting data from the data providing means (2) to the user terminal (4), **characterised by**:
providing adaptation of the data to the handedness of a user of the user terminal (4).

15. A method of communication according to claim 14, wherein a handedness proxy server (14) is arranged to receive the data from the data providing means (2), adapt the data to the handedness of the user, and transmit the handedness adapted data to the user terminal (4).
